# EUROPÄISCHE PATENTSCHRIFT

(11) **EP 2 756 021 B1**
(45) Veröffentlichungstag und Bekanntmachung des Hinweises auf die Patenterteilung: **18.05.2016**
(21) Anmeldenummer: 12750397.7
(22) Anmeldetag: 27.08.2012
(51) Int. Cl.: C08G 101/00, C08J 9/02, C08G 18/48, C08G 18/76, C08J 9/14, E04C 1/41

(54) **VERFAHREN ZUR HERSTELLUNG VON HOHLBLOCKSTEINEN MIT EINEM POLYURETHAN-HARTSCHAUM**
METHOD FOR PRODUCING HOLLOW BLOCKS WITH A FOAM MADE OF POLYURETHANE
MÉTHODE DE FABRICATION DE BRIQUES CREUSES AVEC UNE MOUSSE DE POLYUTÉTHANE

(30) Priorität: 30.08.2011 EP 11179387
(43) Veröffentlichungstag der Anmeldung: 23.07.2014
(73) Patentinhaber: BASF SE, 67056 Ludwigshafen am Rhein (DE)
(72) Erfinder: WINTERMANN, Peter, 49377 Vechta (DE)
(74) Vertreter: BASF IP Association
(86) Internationale Anmeldenummer: PCT/EP2012/066576
(87) Internationale Veröffentlichungsnummer: WO 2013/030142

(56) Entgegenhaltungen:
- EP-A2- 0 190 565
- DE-A1-102004 051 102

## Beschreibung

Die Erfindung betrifft Hohlblocksteine, die eine Wärmedämmung enthalten, sowie ein Verfahren zu ihrer Herstellung.

Es ist bekannt, zur besseren Wärmedämmung von Gebäuden Hohlblocksteine einzusetzen, deren Hohlräume mit einem Dämmstoff gefüllt sind. Als Dämmstoff können beispielsweise Kunststoffschäume eingesetzt werden.

In DE 102006054457 wird ein Verfahren zur nachträglichen Dämmung von Mauerwerk beschrieben, bei dem in die Hohlräume des Mauerwerks ein Polyurethan-Montageschaum eingefüllt wird. Eine derartige Vorgehensweise ist jedoch umständlich und zeitraubend. Vorteilhafter ist eine Dämmung der Hohlräume in den Hohlblocksteinen bereits vor der Verwendung beim Bau.

So beschreibt DE 34 18 0007 Hohlblocksteine, in deren Öffnungen Harnstoff-Formaldehydschäume unter Druck eingefüllt werden.

DE 27 30 075 beschreibt Hohlblocksteine, in deren Hohlräume Polyurethan-Schaumstoffe eingebracht werden. Dabei werden die Steine zum Einbringen der Rohstoffe für die Polyurethan-Ha rtschaumstoffe auf eine wandernde Unterlage gebracht. Unterhalb der Steine befindet sich eine körnige Schicht, durch die eine Verschmutzung der wandernden Unterlage vermieden werden soll.

In DE 35 04 104 wird ein Verfahren zur Herstellung von Hohlblocksteinen mit einer Schaumstofffüllung beschrieben. Dabei wird zunächst ein Hohlblockstein hergestellt, dieser so auf ein Förderband gestellt, dass ein flüssiges, Treibmittel enthaltendes Kunststoffgemisch in die Hohlräume eindosiert werden kann, wo es zum Schaum aushärtet. Dabei sollen während des Aushärtens die Öffnungen abgedeckt werden.

EP 190565 A2 offenbart oben offene Hohlblocksteine, in die geringe Mengen einer treibmittelhaltigen Kunststoffmischung eindosiert werden, die anschließend aufschäumt und die Kammer vollständig füllt.

DE 102004051102 A1 beschreibt ein Verfahren zur Herstellung von Polyurethan-Hartschaumstoffen.

Ein Problem bei der Dämmung von Hohlblocksteinen mit Polyurethan-Schaum ist der Druckaufbau während des Schäumens. Insbesondere bei hartgebrannten Ziegeln kann es zu einer Zerstörung der Zwischenwände kommen. Um dies zu verhindern, sind dicke Zwischenwände erforderlich. Dadurch erhöht sich das Gewicht der Steine und die Wärmeleitfähigkeit nimmt zu.

Es war die Aufgabe der Erfindung, Hohlblocksteine bereitzustellen, die mit einer Dämmung versehen sind. Dabei sollte die Wärmeleitfähigkeit der Hohlblocksteine gering sein. Weiterhin sollte das Gewicht der Hohlblocksteine gering sein. Die Hohlblocksteine sollten einfach merzustellen sein.

Die Aufgabe konnte überraschenderweise gelöst werden durch Hohlblocksteine, zu deren Dämmung ein Polyurethansystem eingesetzt wird, das bei der Schaumbildung nur einen geringen Druckaufbau entwickelt.

Gegenstand der Erfindung ist ein Verfahren zur Herstellung von Dämmmaterial enthaltenden Hohlblocksteinen, enthaltend mindestems eine Kammer, in der sich ein Polyurethan-Hartschaumstoff mit einer Dichte im Bereich von 30 - 70 g/L befindet, dadurch gekennzeichnet, dass der Polyurethan-Hartschaumstoff hergestellt wird durch Umsetzung mindestens eines Polyisocyanafts a) mit mindestens einer Verbindung mit mindestens zwei mit Isocyanatgruppen reaktiven Wasserstoffatomen b) in Anwesenheit mindestens eines Katalysators d) und unter Verwendung von einem Treibmittel c), enthaltend mindestens ein Treibmittel ci), das seine Treibwirkung erst bei der Reaktion von a) mit b) entfaltet und ein Treibmittel cii), das einen Siedepunkt besitzt, der unterhalb der Temperatur liegt, bei der die Komponenten a) und b) vermischt werden, wobei der Druckaufbau während der Schäumreaktion des Polyurethans geringer als 20 kPa bileibt.

Die Druckbestimmung erfolgt mittels eines "Foamat®"-Meßgeräts der Firma Format-Messtechnik GmbH. Die Messungen werden wie in den Herstellerunterlagen "Foarmat® Typ 281 mit Programm SCHAUM Version 3.x" beschrieben durchgeführt. Mit dem Foamat Meßgerät wird während der Schäumreaktion der Druckaufbau für das reagierende System auffgezeichnet. Die Druckmessung erfolgt im Bodenbereich des aus einem offenen Rohr und einem Teller gebildeten Probengefäßes. Der Bodenteller ist mit einem Druckmesssensor verbundem.

Vorzugsweise ist der Druckaufbau während der Schäumreaktion kleiner 15 kPa, besonders bevorzugt kleiner 10 kPa und insbesondere kleiner 5 kPa.

Die Hohlblocksteine, in deren Kammern das Polyurethan eingebracht wird, werden zunächst nach üblichen und bekannten Verfahren hergestellt. Sie können bekanntermaßen aus Beton, Leichtbeton, Kalksandstein oder Ton hergestellt werden. die aus Ton hergestellten Hohlblocksteine werden auch als Hohlziegel oder Lochziegel bezeichnet, wobei der Begriff Lochziegel bei einem Lochanteil von 15 bis 45 % und der Begriff Hohlziegel bei einem Lochanteil von größer 45 % verwendet wird. Im Folgenden wird für beide Ausführungsformen der Begriff Hohlziegel gebraucht.

Die Hohlblocksteine sind vorzugsweise quaderförmig, ihre Kantenlänge beträgt vorzugsweise 200-500 (Länge) x 200-500 (Breite) x 200-300 (Höhe) mm.

Bevorzugt werden zur Herstellung der erfindungsgemäßen Hohlblocksteine Hohlziegel verwendet, da diese besonders empfindlich auf den Druck bei der Verschäumung reagieren und bei einem zu hohen Druck bei der Verschäumung zerstört werden können.

Die Herstellung erfolgt nach bekannten Verfahren, üblicherweise durch Formgebung, beispielsweise Extrudieren, der Tonmischung und nachfolgendes Ablängen und Brennen der so gewonnenen Rohlinge.

Die Hohlräume können eckig oder rund, bevorzugt rechteckig, sein. Prinzipiell können die Hohlblocksteine nur einen Hohlraum enthalten. Zur Verbesserung der Stabilität der Hohlblocksteine enthalten diese vorzugsweise mehrere Hohlräume. Die genaue Zahl der Hohlräume hängt zumeist von der Geometrie der Hohlräume und der Stabilität der Steine ab.

Vorzugsweise enthalten die Hohlblocksteine bis zu 40, bevorzugt 2 - 40, besonders bevorzugt 3 - 30, insbesondere 4 - 20 Hohlräume.

In die Hohlräume der Bausteine werden danach die flüssigen Ausgangsverbindungen des Polyurethans, im Folgenden auch als Polyurethansystem bezeichnet, eingebracht. Auf die Zusammensetzung des Polyurethansystems wird weiter unten näher eingegangen.

Dies geschieht, indem die erforderliche Menge des Polyurethansystems mittels einer Dosiereinrichtung, beispielsweise einem Mischkopf, in die Hohlräume eingebracht wird, wo sie zum Schaum aushärtet. Die Dosierung kann im einfachsten Fall manuell, bevorzugt jedoch automatisch, beispielsweise unter Verwendung eines Transportbands und einer automatischen Dosiereinrichtung wie in DE 35 04 104 beschreiben erfolgen.

Die Menge der verwendeten Polyurethan-Ausgangskomponenten ist vorzugsweise so zu bemessen, dass die Hohlräume vollständig ausgefüllt werden. Prinzipiell kann auch mit einer leichten Überfüllung, vorzugsweise bis 10 %, gearbeitet werden. Der Schaumstoff sollte nicht über die Kanten des Hohlblocksteins herausragen.

Die zum Füllen der Hohlräume eingesetzten Polyurethan-Hartschaumstoffe sind vorzugsweise geschlossenzellig. Geschlossenzellig bedeutet hierbei, dass der Anteil an geschlossenen Zellen des Schaums, bestimmt nach DIN ISO 4590, mindestens 90 % beträgt.

Wie beschrieben, erfolgt die Umsetzung in Anwesenheit eines Treibmittels c) das ein Gemisch aus eine Komponente ci) und einer Komponente cii) ist.

Das Treibmittel ci) kann ein chemisches Treibmittel sein. Bevorzugt wird als chemisches Treibmittel ci) Wasser eingesetzt. Vorzugsweise wird in dieser Ausführungsform das Wasser in einer Menge von größer 0 Gew.-%, besonders bevorzugt größer 0,5 Gew.-%, und bis 3 Gew.-%, bezogen auf die Komponente b)eingesetzt.

Das Treibmittel ci) kann auch ein physikalisches Treibmittel sein, insbesondere ein gegebenenfalls halogenierter Kohlenwasserstoff. Wenn als Treibmittel ci) ein physikalisches Treibmittel eingesetzt wird, ist dies vorzugsweise ausgewählt aus der Gruppe, enthaltend Kohlenwasserstoffe und halogenierte Kohlenwasserstoffe. Bevorzugt sind gesättigte Kohlenwasserstoffe, im folgenden auch als Alkane bezeichnet, und olefinisch ungesättigte Kohlenwasserstoffe, im folgenden auch als Alkene bezeichnet.

Aus Sicherheitsgründen werden vorzugsweise halogenierte Alkane eingesetzt, wobei aus ökologischen Gründen solche bevorzugt sind, die noch mindestens ein Wasserstoffatom im Molekül enthalten.

Derartige Treibmittel sind allgemein bekannt und sind vielfach beschrieben. Beispiele hierfür sind 1,1,1,3,3,-pentafluoropropan (HFC-245fa), HCl₂C-CF₂ (HFCKW 123), Cl₂FC-CH₃ (HFCKW 141b).

Weiterhin können auch Gemische aus 365fa und HFC 227 (1,1,1,3,3-Pentafluorobutan und 1,1,1,2,3,3,3-Heptafluoropropan) eingesetzt werden. Diese Gemische werden beispielsweise von der Firma Solvay als Solkane® 365/227 angeboten. Dabei liegen die Mischungsverhältnisse von 365 zu 227 vorzugsweise im Bereich zwischen 87 : 13 und 93 : 7.

Die physikalischen Treibmittel ci) werden vorzugsweise in einer Menge von größer 0 bis 20 Gew.-%, bezogen auf die Komponente b), eingesetzt.

In einer Ausführungsform des erfindungsgemäßen Verfahrens wird als Treibmittel ci) eine Mischung aus mindestens einem physikalischen und mindestens einem chemischen Treibmittel eingesetzt. Üblicherweise handelt es sich dabei um die Mischung von Wasser und mindestens einem halogenierten Kohlenwasserstoff. Vorzugsweise wird auch in dieser Ausführungsform das Wasser in einer Menge von größer 0 Gew.-%, besonders bevorzugt größer 0,5 Gew.-%, und bis 3 Gew.-% eingesetzt. Die physikalischen Treibmittel werden auch in dieser Ausführungsform vorzugsweise in einer Menge von größer 0 bis 20 Gew.-%, bezogen auf die Komponente b), eingesetzt.

Die genaue Menge der Treibmittel richtet sich nach der angestrebten Dichte der Schaumstoffe.

Das Treibmittel cii) ist üblicherweise eine Mischung von physikalischen Treibmitteln. Vorzugsweise handelt es sich dabei um halogenierte Kohlenwasserstoffe.

Vorzugsweise weist das Treibmittel cii2) einen Siedepunkt von kleiner 20 °C, besonders bevorzugt kleiner 0°C auf.

Insbesondere ist das Treibmittel cii2) ausgewählt aus der Gruppe, enthaltend 1,1,1,2,3,3,3-Heptafluorpropan, 1,1,1,2-Tetrafluoroethan (134a), das Hydrofluoroolefin HFO-1234ze oder Mischungen daraus, wobei 1,1,1,2,3,3,3-Heptafluorpropan und 1,1,1,2-Tetrafluoroethan die größte technische Bedeutung haben.

Das Treibmittel cii) wird dem Reaktionsgemisch vorzugsweise unmittelbar vor oder vorzugsweise während der Vermischung der Komponenten a) und b) zugemischt. Vorzugsweise wird es aus einem gesonderten Tank mindestens einer der Reaktionskomponenten a) oder b), vorzugsweise a), in das Leitungswerk der Schäumanlage, vorzugsweise in die Zuleitung zum Mischkopf, zugesetzt, beispielsweise über einen statischen Mischer. Es ist auch möglich, das Treibmittel cii) direkt in den Mischkopf zu dosieren. Das Treibmittel cii) wird vorzugsweise mindestens in einer Menge von größer 0, besonders bevorzugt größer 0,5 Gew.-%, eingesetzt. Die Höchstmenge beträgt 12 Gew.-%, vorzugsweise 10 Gew.-%, wobei sich die Gewichts-% auf die Komponente b) beziehen.

Das Treibmittel ci) liegt vor der Vermischung der Komponenten a) und b) in mindestens einer der Komponenten a) oder b) vor. Zumeist wird das Treibmittel ci) der Komponente b) zugesetzt. Dies erfolgt üblicherweise bereits bei der Abmischung der Polyurethansysteme. Auf Grund der über der Raumtemperatur liegenden Siedetemperaturen der Treibmittel ci) sind die Mischungen aus den Komponenten und den Treibmitteln lagerstabil.

Das flüssige Reaktionsgemisch wird nach der Gießschaumtechnik, wie sie bekanntermaßen für Anwendungen in Bauwesen praktiziert wird, in die Hohlkammern eingetragen.

Durch die Wirkung des Treibmittels cii) wird die aus der Mischvorrichtung austretende Reaktionsmischung leicht aufgebläht. Dadurch steigt die Viskosität der austretenden Mischung an und der Druckaufbau während des Schäumvorganges wird gegenüber Standard-Polyurethan-Hartschaumsystemen verringert.

Beim Aufblähen durch die Froth-Wirkung wird bereits ein Schaum gebildet, der einen großen Teil der Hohlräume ausfüllt, ohne dass es zu einem nennenswerten Druckaufbau kommt. Durch das Treibmittel ci) wird der Schaum auf die angestrebte Dichte gebracht. Auch hier erfolgt kein nennenswerter Druckaufbau. Die Aushärtung erfolgt durch die Reaktion der Komponenten a) und b).

Zu den Einsatzkomponenten des Polyurethan-Hartschaumstoffs ist im Einzelnen folgendes zu sagen.

Als organische Polyisocyanate a) kommen alle bekannten organischen Di- und Polyisocyana-te in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen kommen solche in Betracht, die mindestens zwei reaktive Gruppen, bevorzugt OH-Gruppen, enthalten und insbesondere Polyetheralkohole und/oder Polyesteralkohole mit OH-Zahlen im Bereich von 25 bis 2000 mg KOH/g zum Einsatz.

Die eingesetzten Polyesteralkohole werden zumeist durch Kondensation von mehr-funktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesterole haben zumeist eine Funktionalität von 1,5 - 4.

Insbesondere kommen Polyetherpolyole in Betracht, die nach bekannten Verfahren erhältlich sind, beispielsweise durch alkalisch katalysierte oder aminkatalysierte Anlagerung von Ethylenoxid und Propylenoxid an H-funktionelle Starter. Als Starter dienen niedermolekulare, zwei- und höherfunktionelle Alkohole oder Amine.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens zwei primären Aminogruppen im Molekül zum Einsatz.

Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vorzugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 2 bis 8 und Hydroxylzahlen von vorzugsweise 25 mg KOH/g bis 2000 mg KOH/g und insbesondere 150 mg KOH/g bis 570 mg KOH/g.

Zu den Verbindungen mit mindestens zwei gegenüber Isocyanat reaktiven Wasserstoffato-men gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Polyurethan- oder Polyisocyanuratschaumstoffe enthalten üblicherweise Flammschutzmittel. Vorzugsweise werden bromfreie Flammschutzmittel eingesetzt. Besonders bevorzugt sind Phosphoratome enthaltende Flammschutzmittel, insbesondere werden Trichlorisopropylphosphat, Diethylethanphosphonat, Triethylphosphat und/oder Diphenylkresylphosphat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre und vorzugsweise tertiäre aliphatische Amine, Imidazole, Amidine, Alkanolamine, Lewissäuren oder metallorganische Verbindungen, insbesondere solche auf Basis von Zinn. Auch Katalysatorsysteme, bestehend aus einer Mischung verschiedener Katalysatoren, können eingesetzt werden.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 105 und 180, liegt. Die Vermischung erfolgt, wie bereits oben gesagt, üblicherweise in einem Mischkopf.

Die erfindungsgemäßen Hohlblocksteine sind mechanisch stabil und zeichnen sich durch eine gute Wärmedämmung aus. Auf Grund des geringen Druckaufbaus kann geschlossenzelliger Polyurethan-Hartschaum zur Isolierung der Hohlblocksteine eingesetzt werden, ohne dass sich die Stabilität der Hohlblocksteine verschlechtert. Damit kann die Wärmeleitfähigkeit der Hohlblocksteine verringert werden.

## Patentansprüche

1. Verfahren zur Herstellung von Dämmmaterial enthaltenden Hohlblocksteinen, enthaltend mindestens eine Kammer, in der sich ein Polyurethan-Hartschaumstoff mit einer Dichte im Bereich von 30 - 70 g/L befindet, **dadurch gekennzeichnet, dass** der Polyurethan-Hartschaumstoff hergestellt wird durch Umsetzung mindestens eines Polyisocyanats a) mit mindestens einer Verbindung mit mindestens zwei mit Isocyanatgruppen reaktiven Wasserstoffatomen b) in Anwesenheit mindestens eines Katalysators d) und unter Verwendung von mindestens einem Treibmittel c), enthaltend mindestens ein Treibmittel ci), das seine Treibwirkung erst bei der Reaktion von a) mit b) entfaltet und ein Treibmittel cii), das einen Siedepunkt besitzt, der unterhalb der Temperatur liegt, bei der die Komponenten a) und b) vermischt werden, wobei der Druckaufbau während der Schäumreaktion des Polyurethans geringer als 20 kPa bleibt.

2. Verfahren nach Anspruch 1 **dadurch gekennzeichnet, dass** der Polyurethan-Hartschaumstoff geschlossenzellig ist.

3. Verfahren nach Anspruch 1, **dadurch gekennzeichnet, dass** das Treibmittel ci) ein chemisches Treibmittel ist.

4. Verfahren nach Anspruch 1, **dadurch gekennzeichnet, dass** das Treibmittel ci) ein physikalisches Treibmittel ist.

5. Verfahren nach Anspruch 4, **dadurch gekennzeichnet, dass** das Treibmittel ci) ausgewählt ist aus der Gruppe, enthaltend Kohlenwasserstoffe und halogenierte Kohlenwasserstoffe.

6. Verfahren nach Anspruch 4 und 5, **dadurch gekennzeichnet, dass** das Treibmittel cii) mindestens ein halogeniertes Alkan enthält.

7. Verfahren nach einem der Ansprüche 1 bis 6, **dadurch gekennzeichnet, dass** das Treibmittel ci) eine Mischung aus mindestens einem physikalischen und mindestens einem chemischen Treibmittel ist.

8. Verfahren nach einem der Ansprüche 1 bis 7, **dadurch gekennzeichnet, dass** das Treibmittel cii) eine Mischung von physikalischen Treibmitteln ist.

9. Verfahren nach einem der Ansprüche 1 bis 8, **dadurch gekennzeichnet, dass** das Treibmittel cii) einen Siedepunkt von kleiner 0°C aufweist.

10. Verfahren nach einem der Ansprüche 1 bis 9, **dadurch gekennzeichnet, dass** der Hohlblockstein, enthaltend mindestens eine Kammer, durch Formen und nachfolgendes Brennen hergestellt wird.

11. Verfahren nach einem der Ansprüche 1 bis 10, **dadurch gekennzeichnet, dass** der Polyurethan-Hartschaumstoffdurch Einbringen der flüssigen Ausgangskomponenten eines Polyurethan-Hartschaumstoffs in die Kammer und Aushärten des Polyurethan-Hartschaumstoffs erhalten wird.

## Claims

1. A process for producing cavity blocks comprising insulating material, comprising at least one chamber containing a rigid polyurethane foam having a density in the range of 30-70 g/L, wherein the rigid polyurethane foam is obtained by reacting at least one polyisocyanate a) with at least one compound having at least two isocyanate-reactive hydrogen atoms b) in the presence of at least one catalyst d) and using at least one blowing agent c), comprising at least one blowing agent ci), which only develops its blowing effect at the time of the reaction of a) with b), and at least one blowing agent cii), which has a boiling point which is below the temperature at which said components a) and b) are mixed, wherein the pressure buildup during the foaming reaction of the polyurethane remains below 20 kPa.

2. The process according to claim 1 wherein the rigid polyurethane foam is of the closed-cell type.

3. The process according to claim 1 wherein said blowing agent ci) is a chemical blowing agent.

4. The process according to claim 1 wherein said blowing agent ci) is a physical blowing agent.

5. The process according to claim 4 wherein said blowing agent ci) is selected from the group comprising hydrocarbons and halogenated hydrocarbons.

6. The process according to either of claims 4 and 5 wherein said blowing agent cii) comprises at least one halogenated alkane.

7. The process according to any one of claims 1 to 6 wherein said blowing agent ci) is a mixture of at least one physical and at least one chemical blowing agent.

8. The process according to any one of claims 1 to 7 wherein said blowing agent cii) is a mixture of physical blowing agents.

9. The process according to any one of claims 1 to 8 wherein said blowing agent cii) has a boiling point of below 0°C.

10. The process according to any one of claims 1 to 9 wherein the cavity block comprising at least one chamber is obtained by molding and subsequent firing.

11. The process according to any one of claims 1 to 10 wherein the rigid polyurethane foam is obtained by introducing the liquid starting components of a rigid polyurethane foam into the chamber and curing the rigid polyurethane foam.

## Revendications

1. Procédé pour la fabrication de blocs creux contenant du matériau isolant, contenant au moins une chambre dans laquelle se trouve une mousse dure de polyuréthane présentant une densité dans la plage de 30-70 g/l, **caractérisé en ce que** la mousse dure de polyuréthane est préparée par transformation d'au moins un polyisocyanate a) avec au moins un composé b) présentant au moins deux atomes d'hydrogène réactifs par rapport aux groupes isocyanate en présence d'au moins un catalyseur d) et avec utilisation d'au moins un agent gonflant c), contenant au moins un agent gonflant ci), qui ne déploie son effet gonflant que lors de la réaction de a) avec b), et un agent gonflant cii), qui présente un point d'ébullition qui est inférieur à la température à laquelle les composants a) et b) sont mélangés, la mise en pression pendant la réaction de moussage du polyuréthane restant inférieure à 20 kPa.

2. Procédé selon la revendication 1, **caractérisé en ce que** la mousse dure de polyuréthane est à cellules fermées.

3. Procédé selon la revendication 1, **caractérisé en ce que** l'agent gonflant ci) est un agent gonflant chimique.

4. Procédé selon la revendication 1, **caractérisé en ce que** l'agent gonflant ci) est un agent gonflant physique.

5. Procédé selon la revendication 4, **caractérisé en ce que** l'agent gonflant ci) est choisi dans le groupe contenant les hydrocarbures et les hydrocarbures halogénés.

6. Procédé selon la revendication 4 et 5, **caractérisé en ce que** l'agent gonflant cii) contient au moins un alcane halogéné.

7. Procédé selon l'une quelconque des revendications 1 à 6, **caractérisé en ce que** l'agent gonflant ci) est un mélange d'au moins un agent gonflant physique et d'au moins un agent gonflant chimique.

8. Procédé selon l'une quelconque des revendications 1 à 7, **caractérisé en ce que** l'agent gonflant cii) est un mélange d'agents gonflants physiques.

9. Procédé selon l'une quelconque des revendications 1 à 8, **caractérisé en ce que** l'agent gonflant cii) présente un point d'ébullition inférieur à 0°C.

10. Procédé selon l'une quelconque des revendications 1 à 9, **caractérisé en ce que** le bloc creux, contenant au moins une chambre, est fabriqué par moulage et cuisson consécutive.

11. Procédé selon l'une quelconque des revendications 1 à 10, **caractérisé en ce que** la mousse dure de polyuréthane est obtenue par introduction des composants de départ liquides d'une mousse dure de polyuréthane dans la chambre et par durcissement de la mousse dure de polyuréthane.
